# NEUE EUROPÄISCHE PATENTSCHRIFT

(11) **EP 2 549 258 B2**
(45) Veröffentlichungstag und Bekanntmachung des Hinweises auf die Entscheidung über den Einspruch: **31.07.2024**
(45) Hinweis auf die Patenterteilung: 05.12.2018
(21) Anmeldenummer: 12007247.5
(22) Anmeldetag: 04.07.2008
(51) Int. Cl.: G01M 17/02

(54) **Reifenprüfanlage**
Tyre testing device
Dispositif d'essai de pneu

(30) Priorität: 13.08.2007 DE 102007038176
(43) Veröffentlichungstag der Anmeldung: 23.01.2013
(62) Teilanmeldung aus: 08012116.3
(73) Patentinhaber: Carl Zeiss Optotechnik GmbH, 83115 Neubeuern (DE)
(72) Erfinder: Steinbichler, Marcus, Dr., 83115 Neubeuern (DE); Huber, Rainer, 83451 Piding (DE); Sun, Junli, 80807 München (DE); Leitner, Bernd, 83115 Neubeuern (DE)
(74) Vertreter: Zinnecker, Armin

(56) Entgegenhaltungen:
- EP-A2- 1 043 578
- EP-A2- 1 099 947
- EP-A2- 1 959 227
- DE-U1- 20 314 939

## Beschreibung

Die Erfindung betrifft eine Reifenprüfanlage zum Prüfen von Reifen und ein Verfahren zum Prüfen von Reifen mit einer derartigen Reifenprüfanlage.

Verfahren zum Prüfen von Reifen sind bereits bekannt. Besonders vorteilhaft ist es, den Reifen interferometrisch zu prüfen. Die interferometrische Prüfung ist ein relatives Prüfverfahren, bei dem die Oberflächenkontur des Reifens in zwei oder auch mehr unterschiedlichen Zuständen miteinander verglichen wird. Typischerweise erfährt der Reifen zwischen den einzelnen Zuständen eine Laständerung, die an fehlerhaften Stellen eine signifikante Änderung der Oberflächenkontur bewirkt. Bei der Laständerung handelt es sich insbesondere um eine Änderung des Umgebungsdrucks. Anhand der Änderung der Oberflächenkontur kann auf Fehlstellen im Reifen rückgeschlossen werden.

Hiervon ausgehend muß bei der interferometrischen Prüfung dafür Sorge getragen werden, daß eine nicht durch die Laständerung bedingte Konturänderung vermieden wird. Dies kann bei heute üblichen Prüfsystemen unter anderem durch einen möglichst schwingungsunempfindlichen Aufbau erreicht werden, der Störungen und Lageveränderungen des Meßkopfes und/oder des Reifens verhindert. Darüber hinaus können Spannungen und Kriechbewegungen im Reifen durch eine stabile Lagerung des Reifens eingedämmt werden.

Zu starke Eigenbewegungen des Reifens führen zu starken Störungen im Ergebnisbild bis hin zu einer Überschreitung des Meßbereichs der interferometrischen Messung. Starre Prüfkörper eignen sich daher besser als Reifen für interferometrische Prüfungen, die auf Kraftänderungen langsam reagieren und sich über einen Zeitraum von Minuten bis sogar Stunden langsam in ihrer Form verändern.

In üblichen interferometrischen Prüfgeräten werden Reifen daher ohne Felge und auf einer Seitenwand liegend geprüft, um eine möglichst vollflächige Unterstützung zu gewährleisten und auf diese Weise Schwingungen und Eigenbewegungen zu minimieren. In dieser Lage prüft mindestens ein Prüfkopf abschnittsweise den ganzen Reifen, wobei die Lauffläche in Einzelsektoren von innen geprüft werden kann und die Wulst und die Seitenwand von außen geprüft werden können.

Aus der EP 1 043 578 A2 ist ein optisches Prüfgerät für Reifen bekannt, welches mehrere Laser-Meßköpfe umfaßt.

Die EP 1 284 409 A1 offenbart eine Vorrichtung zur Untersuchung von Reifen mit einem interferometrischen Meßkopf und mit einem Lichtschnittkonturerfassungssystem zur Erzeugung von Lichtflächen, die so zu einer Kamera hin ausgerichtet sind, daß die erzeugten Lichtschnitte auf dem Reifen mit der Kamera beobachtet werden können.

Aus der EP 1 355 142 A2 ist ein Reifenprüfgerät bekannt, das waagrechte Rollen aufweist, auf die der Reifen in senkrechter Lage positionierbar ist.

Bei den vorbekannten Reifenprüfgeräten wird der Prüfkopf relativ zum Reifen im Umfang bewegt, um nacheinander zunächst die ganze Lauffläche und in einem zweiten Durchlauf die ersten Seitenwand zu prüfen. Danach muß der Reifen angehoben und gewendet werden, um in einem dritten Durchlauf auch die zweite Seitenwand prüfen zu können.

Diesem Nachteil wird nach der EP 1 355 142 A2 dadurch begegnet, daß der Reifen stehend geprüft wird, so daß beide Seitenwände des Reifens geprüft werden können, ohne daß der Reifen gewendet werden muß. Zur Prüfung des Reifens wird dabei jeweils ein Abschnitt geprüft. Danach wird der Reifen weitergedreht, um auf diese Weise den gesamten Reifen untersuchen zu können. Zum Drehen des Reifens sind Rollen vorgesehen, die den Reifen an der Lauffläche oder im Felgenloch unterstützen. Dabei erfährt der Reifen jedoch jeweils ungleichmäßige Kräfte, die zu Druckstellen und Ganzkörperverformungen führen können. Vor der interferometrischen Prüfung muß auf das Abklingen dieser Störungen gewartet werden. Nach jeder Drehung des Reifens zur Prüfung des nächsten Teilabschnitts herrschen neue Kräfteverhältnisse, die zum Teil minutenlange Wartezeiten bedingen können.

Weitere Reifenprüfgeräte sind aus der DE 103 19 099 B4, DE 689 22 855 T2, DE 10 2006 015 123 A1, DE 42 32 201 A1, EP 1 808 686 A1, EP 1 500 917 A2 und US 2005/0058333 A1 bekannt.

Die prioritätsältere, nicht vorveröffentlichte EP 1 959 227 A2 offenbart eine Reifenprüfanlage zum Prüfen von flach auf einer Unterlage aufliegenden Reifen mit vier oder mehr Messköpfen zum Prüfen der Seitenwand des Reifens.

Aus der DE 203 14 939 U1 ist eine Reifenprüfeinrichtung mit hängendem Reifen bekannt, bei der ein Messkopf für die Reifenseitenwand, ein Messkopf zur Inspektion der Reifeninnenwand und ein Messkopf zur Inspektion der gegenüberliegenden Seitenwand vorhanden ist.

Aufgabe der Erfindung ist es, eine verbesserte Reifenprüfanlage der eingangs angegebenen Art und ein verbessertes Verfahren zum Prüfen von Reifen mit einer derartigen Reifenprüfanlage vorzuschlagen.

Erfindungsgemäß wird diese Aufgabe bei einer Reifenprüfanlage zum Prüfen von Reifen durch die Merkmale des Anspruchs 1 gelöst. Die Reifenprüfanlage zum Prüfen von flach mit ihrer Seitenfläche auf einer horizontalen Unterlage aufliegenden Reifen umfaßt ein Reifenprüfgerät mit mehreren Prüfköpfen zum Prüfen der inneren Lauffläche des Reifens und doppelt so vielen Prüfköpfen zum Prüfen der äußeren Seitenfläche des Reifens. Bei den Prüfköpfen handelt es sich insbesondere um interferometrische Prüfköpfe. Vorzugsweise umfassen die Prüfköpfe eine Quelle für gerichtetes Licht, insbesondere Laserlicht, ein Interferometer und eine Kamera. Die Kamera umfaßt vorzugsweise eine Aufnahmeoptik und einen Bildsensor, insbesondere eine CCD-Sensor. Der Prüfköpfe sind vorzugsweise verschwenkbar. Sie können um eine oder mehrere Achsen verschwenkbar sein. Stattdessen oder zusätzlich können die Prüfköpfe in eine oder mehrere Richtungen verfahrbar sein. Ferner umfaßt das Reifenprüfgerät vorzugsweise eine Druckkammer, insbesondere eine Unterdruckkammer.

Die Erfindung ist dadurch gekennzeichnet, daß das Reifenprüfgerät mehrere Prüfköpfe zum Prüfen der inneren Lauffläche des Reifens und doppelt so viele Prüfköpfe zum Prüfen der äußeren Seitenfläche des Reifens aufweist. Die Prüfköpfe zum Prüfen der inneren Lauffläche des Reifens und die Prüfköpfe zum Prüfen der äußeren Seitenfläche des Reifens sind vorzugsweise in gleichen Winkelabständen um den Umfang verteilt. Beim Betrieb dieses Reifenprüfgeräts wird zunächst die Hälfte der inneren Lauffläche des Reifens und die Gesamtheit einer äußeren Seitenfläche des Reifens geprüft. Wenn beispielsweise zwei Prüfköpfe zum Prüfen der inneren Lauffläche des Reifens und vier Prüfköpfe zum Prüfen der äußeren Seitenfläche des Reifens vorhanden sind müssen die Prüfköpfe und/oder der Reifen um 90° gedreht werden, um diese Prüfung durchzuführen. Danach wird der Reifen gewendet, und es wird die verbleibende Hälfte der inneren Lauffläche des Reifens und die Gesamtheit der anderen äußeren Seitenfläche des Reifens geprüft.

Vorteilhafte Weiterbildungen sind in den Unteransprüchen beschrieben.

Die Reifenprüfanlage kann eine Wendevorrichtung zum Wenden des Reifens umfassen. Der Reifen kann allerdings auch von Hand gewendet werden.

Vorteilhaft ist es, wenn die Reifenprüfanlage eine Markiereinrichtung zum Markieren des Reifens vor dem Wenden des Reifens umfaßt. Auf diese Weise kann gewährleistet werden, daß der Reifen nach dem Wenden lagerichtig in dem Reifenprüfgerät positioniert wird.

Die Reifenprüfanlage kann eine Lageerfassungseinrichtung zum Erfassen der Lage des Reifens vor und/oder nach dem Wenden des Reifens umfassen.

Nach einer weiteren vorteilhaften Weiterbildung umfaßt die Reifenprüfanlage eine Positioniereinrichtung zum lagerichtigen Positionieren des Reifens nach dem Wenden des Reifens.

Bei einem Verfahren (Anspruch 6) zum Prüfen von Reifen mit einer erfindungsgemäßen Reifenprüfanlage wird die der Erfindung zugrundeliegende Aufgabe dadurch gelöst, daß mehrere oder alle Prüfköpfe einen Teil des Reifens prüfen, daß der Reifen gewendet wird und daß mehrere oder alle Prüfköpfe den verbleibenden Teil des Reifens prüfen.

Vorteilhaft ist es, wenn die Prüfköpfe die innere Lauffläche und die äußere Seitenfläche des Reifens prüfen. Vorzugsweise wird nur die innere Lauffläche und die äußere Seitenfläche des Reifens geprüft.

Eine weitere vorteilhafte Weiterbildung ist dadurch gekennzeichnet, daß vor oder nach dem Wenden des Reifens eine äußere Seitenfläche und eine Hälfte der inneren Lauffläche des Reifens geprüft wird und daß nach oder vor dem Wenden des Reifens die andere äußere Seitenfläche und die andere Hälfte der inneren Lauffläche des Reifens geprüft wird. Vorzugsweise wird dabei nur die innere Lauffläche des Reifens geprüft.

Nach einer weiteren vorteilhaften Weiterbildung wird vor oder nach dem Wenden des Reifens eine äußere Seitenfläche und die innere Lauffläche, vorzugsweise nur die innere Lauffläche, des Reifens geprüft und wird nach oder vor dem Wenden des Reifens die andere äußere Seitenfläche des Reifens geprüft.

Der Reifen kann vor dem Wenden markiert werden.

Es ist möglich, daß die Lage des Reifens vor und/oder nach dem Wenden erfaßt wird.

Vorteilhaft ist es, wenn der Reifen nach dem Wenden lagerichtig positioniert wird.

Ausführungsbeispiele der Erfindung werden nachstehend anhand der beigefügten Zeichnung im einzelnen erläutert. In der Zeichnung zeigt
- Fig. 1: eine Reifenprüfanlage mit einem Reifenprüfgerät mit drei Prüfköpfen und einer Wendevorrichtung in einer schematischen Darstellung (nicht Bestandteil der Erfindung),
- Fig. 2: eine Abwandlung der Reifenprüfanlage gemäß Fig. 1 mit einem Reifenprüfgerät mit sechs Prüfköpfen und
- Fig. 3: eine Reifenprüfanlage mit einem Reifenprüfgerät mit zwei Prüfköpfen und einer Wendevorrichtung in einer schematischen Darstellung (nicht Bestandteil der Erfindung).

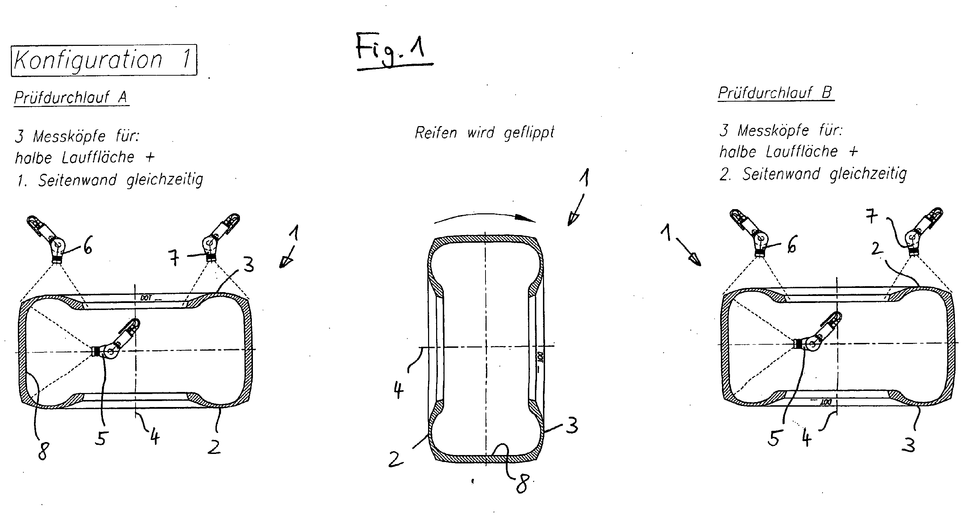

In dem Reifenprüfgerät der Reifenprüfanlage gemäß Fig. 1 liegt der Reifen 1 flach auf einer Unterlage auf. Die Seitenfläche 2 liegt auf der horizontalen Unterlage (in der Zeichnung nicht dargestellt). Die andere Seitenfläche 3 liegt oben und ist frei zugänglich. Die Reifen-Mittenachse 4 verläuft vertikal. Der Reifen 1 ist nicht auf einer Felge montiert.

Der erste Prüfkopf 5 wird in das Innere des Reifens 1 hineinbewegt. Hierzu ist Prüfkopf 5 vertikal beweglich. Er kann darüber hinaus auch horizontal beweglich sein. Ferner kann der Prüfkopf um eine horizontale Achse verschwenkbar sein.

Der zweite Prüfkopf 6 und der dritte Prüfkopf 7 werden oberhalb des Reifens positioniert, und zwar in der Weise, daß sie die obere Seitenfläche 3 des Reifens 1 prüfen können. Die Prüfköpfe 6 und 7 sind in Umfangsrichtung um 180° versetzt. Sie liegen einander gegenüber.

Der Reifen 1 und die Prüfköpfe 5, 6, 7 können sich in einer Druckkammer, insbesondere einer Unterdruckkammer, des Reifenprüfgeräts befinden. Im ersten Prüfdurchlauf wird der Reifen 1 um 180° um die vertikale Achse 4 gedreht. Stattdessen oder zusätzlich können die Prüfköpfe 5, 6, 7 gedreht werden, um eine Relativdrehung des Reifens 1 gegenüber den Prüfköpfen 5, 6, 7 zu erreichen. Auf diese Weise wird im ersten Prüfdurchlauf die Hälfte der inneren Lauffläche 8 und die gesamte Seitenfläche 3 geprüft.

Danach wird der Reifen gewendet ("geflippt"), so daß die bisher auf der Unterlage liegende Seitenfläche 2 jetzt oben liegt und der Reifen mit der geprüften Seitenfläche 3 auf der Unterlage aufliegt. Zum Wenden des Reifens 1 kann vorher der Prüfkopf 5 aus dem Reifen 1 herausgefahren werden. Der Reifen 1 kann zum Wenden aus dem Reifenprüfgerät herausgenommen werden und danach wieder in das Reifenprüfgerät eingelegt werden. Dies kann von Hand oder durch eine Wendevorrichtung geschehen. Vor dem Wenden kann auf den Reifen 1 eine Markierung aufgebracht werden, um zu gewährleisten, daß der Reifen nach dem Wenden lagerichtig in dem Reifenprüfgerät positioniert wird. Hierzu kann in dem Reifenprüfgerät eine Lageerfassungseinrichtung zum Erfassen der Lage des Reifens 1 vor und/oder nach dem Wenden des Reifens 1 vorhanden sein. Ferner kann in dem Reifenprüfgerät eine Positioniereinrichtung zum lagerichtigen Positionieren des Reifens nach dem Wenden des Reifens vorhanden sein.

Im zweiten Prüfdurchlauf wird der Reifen wieder um 180° gedreht und/oder die Prüfköpfe 5, 6, 7 werden gedreht, so daß eine Relativdrehung des Reifens 1 gegenüber den Prüfköpfen 5, 6, 7 um 180° stattfindet. Der Drehwinkel kann etwas größer sein als 180°, um einen gewissen Überlappungsbereich zu erzeugen. Durch die Markiereinrichtung und/oder Lageerfassungseinrichtung und/oder Positioniereinrichtung wird gewährleistet, daß beide Hälften der Innenfläche, insbesondere der inneren Lauffläche, des Reifens geprüft werden.

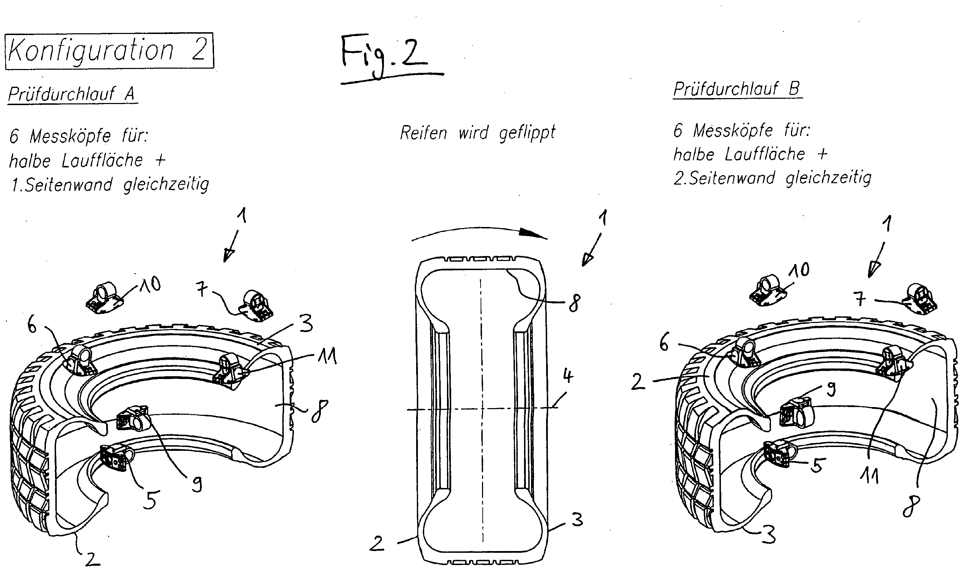

In der Abwandlung nach Fig. 2 sind zwei Prüfköpfe 5, 9 für die Innenfläche des Reifens und vier Prüfköpfe 6, 7, 10, 11 für die Seitenfläche des Reifens vorhanden. Die Prüfköpfe 5, 9 und die Prüfköpfe 6, 7, 10, 11 sind jeweils um 90° in Umfangsrichtung versetzt. Bei der Ausführungsform nach Fig. 2 genügt eine Relativdrehung von 90° oder etwas mehr als 90° zwischen dem Reifen und den Prüfköpfen zur vollständigen Prüfung des Reifens.

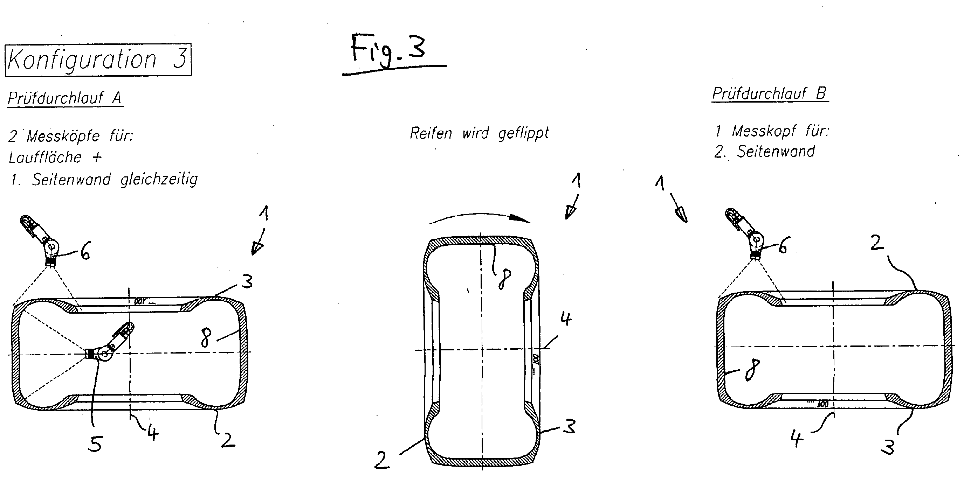

In Fig. 3 ist ein Beispiel mit zwei Prüfköpfen gezeigt. Der erste Prüfkopf dient zum Prüfen der Innenfläche, insbesondere der inneren Lauffläche 8, des Reifens 1. Der zweite Prüfkopf dient zum Prüfen einer Seitenfläche des Reifens 1.

In einem Prüfdurchlauf, der in Fig. 3 links gezeigt ist, wird die gesamte Innenfläche 8 des Reifens 1 und die gesamte Seitenfläche 3 geprüft. Im anderen Prüfdurchlauf, der in Fig. 3 rechts gezeigt ist, wird die andere Seitenfläche 2 des Reifens geprüft. In beiden Prüfdurchläufen wird der Reifen jeweils um 360° relativ zu den Prüfköpfen gedreht.

Durch die Erfindung ist es möglich, die Anzahl der Prüfdurchläufe von drei auf zwei zu reduzieren. Bei den Ausführungsformen nach Fig. 1 und 2 werden drei Prüfköpfe oder ein ganzzahliges Vielfaches von drei Prüfköpfen verwendet, wobei zwei Prüfköpfe bzw. zwei Drittel der Prüfköpfe die komplette erste Seitenwand von außen prüfen, während der dritte Prüfkopf bzw. das dritte Drittel der Prüfköpfe die Hälfte der Innenfläche bzw. inneren Lauffläche untersucht. Nach dem Wenden des Reifens wird in einem zweiten Prüfdurchlauf die zweite Seitenwand und die zweite Hälfte der Innenfläche des Reifens auf die gleiche Weise geprüft.

Dabei kann der Reifen relativ zu den Prüfköpfen gedreht werden. Es können aber auch die Prüfköpfe getrennt oder gemeinsam im Umfang des Reifens gedreht werden. Ferner können beide Möglichkeiten miteinander kombiniert werden.

Bei dem Beispiel nach Fig. 3 wird eine Anordnung mit zwei Prüfköpfen oder einem ganzzahligen Vielfachen von zwei Prüfköpfen verwendet, wobei ein Prüfkopf bzw. die Hälfte der Prüfköpfe zur Prüfung der Seitenwand und ein Prüfkopf bzw. die andere Hälfte der Prüfköpfe für die Prüfung der Innenfläche des Reifens verwendet werden. Der Reifen wird in zwei Durchgängen geprüft. In einem der beiden Durchgänge werden die Innenfläche und die erste Seitenwand geprüft, im anderen Durchgang wird nur die zweite Seitenwand geprüft. Dies dauert zwar gegenüber den Reifenprüfvorrichtungen nach Fig. 1 und 2 etwas länger, dafür sind aber weniger Prüfköpfe erforderlich.

## Patentansprüche

1. Reifenprüfanlage zum Prüfen von flach mit ihrer Seitenfläche (2) auf einer horizontalen Unterlage aufliegenden Reifen, mit einem Reifenprüfgerät,
**dadurch gekennzeichnet,**
**daß** das Reifenprüfgerät mehrere Prüfköpfe (5, 9) zum Prüfen der inneren Lauffläche (8) des Reifens (1) und doppelt so viele Prüfköpfe (6, 10, 7, 11) zum Prüfen der äußeren Seitenfläche (3, 2) des Reifens (1) aufweist.

2. Reifenprüfanlage nach Anspruch 1, **gekennzeichnet durch** eine Wendevorrichtung zum Wenden des Reifens (1).

3. Reifenprüfanlage nach Anspruch 2, **gekennzeichnet durch** eine Markiereinrichtung zum Markieren des Reifens (1) vor dem Wenden des Reifens (1).

4. Reifenprüfanlage nach einem der Ansprüche 2 oder 3, **gekennzeichnet durch** eine Lageerfassungseinrichtung zum Erfassen der Lage des Reifens (1) vor und/oder nach dem Wenden des Reifens (1).

5. Reifenprüfanlage nach einem der Ansprüche 2-4, **gekennzeichnet durch** eine Positioniereinrichtung zum lagerichtigen Positionieren des Reifens (1) nach dem Wenden des Reifens (1).

6. Verfahren zum Prüfen von Reifen mit einer Reifenprüfanlage nach einem der vorhergehenden Ansprüche,
**dadurch gekennzeichnet,**
**daß** mehrere oder alle Prüfköpfe (5, 9; 6, 7, 10, 11) einen Teil (8; 3, 2) des Reifens (1) prüfen, daß der Reifen (1) gewendet wird und daß mehrere oder alle Prüfköpfe (5, 9; 6, 7, 10, 11) den verbleibenden Teil (8; 2, 3) des Reifens prüfen.

7. Verfahren nach Anspruch 6, **dadurch gekennzeichnet, daß** die Prüfköpfe (5, 9; 6, 7, 10, 11) die innere Lauffläche (8) und die äußere Seitenfläche (3, 2) des Reifens (1) prüfen.

8. Verfahren nach Anspruch 6 oder 7, **dadurch gekennzeichnet, daß** vor oder nach dem Wenden des Reifens (1) eine äußere Seitenfläche (3, 2) und eine Hälfte der inneren Lauffläche (8) des Reifens (1) geprüft wird und daß nach oder vor dem Wenden des Reifens (1) die andere äußere Seitenfläche (2, 3) und die andere Hälfte der inneren Lauffläche (8) des Reifens (1) geprüft wird.

9. Verfahren nach Anspruch 6 oder 7, **dadurch gekennzeichnet, daß** vor oder nach dem Wenden des Reifens (1) eine äußere Seitenfläche (3, 2) und die innere Lauffläche (8) des Reifens (1) geprüft wird und daß nach oder vor dem Wenden des Reifens (1) die andere äußere Seitenfläche (2, 3) des Reifens (1) geprüft wird.

10. Verfahren nach einem der Ansprüche 6 bis 9, **dadurch gekennzeichnet, daß** der Reifen (1) vor dem Wenden markiert wird.

11. Verfahren nach einem der Ansprüche 6 bis 10, **dadurch gekennzeichnet, daß** die Lage des Reifens (1) vor und/oder nach dem Wenden erfaßt wird.

12. Verfahren nach einem der Ansprüche 6 bis 11, **dadurch gekennzeichnet, daß** der Reifen (1) nach dem Wenden lagerichtig positioniert wird.

## Claims

1. Tyre testing device for testing tyres lying flat with their side surface (2) on a horizontal underlying surface, comprising a tyre tester,
**characterized**
**in that** the tyre tester has a number of testing heads (5, 9) for testing the inner running surface (8) of the tyre (1) and twice as many testing heads (6, 10, 7, 11) for testing the outer side surface (3, 2) of the tyre (1).

2. Tyre testing device according to Claim 1, **characterized by** a turning device for turning the tyre (1) .

3. Tyre testing device according to Claim 2, **characterized by** a marking device for marking the tyre (1) before the turning of the tyre (1).

4. Tyre testing device according to either of Claims 2 and 3, **characterized by** a position detecting device for detecting the position of the tyre (1) before and/or after the turning of the tyre (1).

5. Tyre testing device according to one of Claims 2-4, **characterized by** a positioning device for the positionally correct positioning of the tyre (1) after the turning of the tyre (1).

6. Method for testing tyres with a tyre testing device according to one of the preceding claims,
**characterized**
**in that** one or more or all of the testing heads (5, 9; 6, 7, 10, 11) test(s) one part (8; 3, 2) of the tyre (1), in that the tyre (1) is turned and in that one or more or all of the testing heads (5, 9; 6, 7, 10, 11) test(s) the remaining part (8; 2, 3) of the tyre.

7. Method according to Claim 6, **characterized in that** the testing heads (5, 9; 6, 7, 10, 11) test the inner running surface (8) and the outer side surface (3, 2) of the tyre (1).

8. Method according to Claim 6 or 7, **characterized in that**, before or after the turning of the tyre (1), one outer side surface (3, 2) and one half of the inner running surface (8) of the tyre (1) are tested and **in that**, after or before the turning of the tyre (1), the other outer side surface (2, 3) and the other half of the inner running surface (8) of the tyre (1) are tested.

9. Method according to Claim 6 or 7, **characterized in that**, before or after the turning of the tyre (1), one outer side surface (3, 2) and the inner running surface (8) of the tyre (1) are tested and **in that**, after or before the turning of the tyre (1), the other outer side surface (2, 3) of the tyre (1) is tested.

10. Method according to one of Claims 6 to 9, **characterized in that** the tyre (1) is marked before the turning.

11. Method according to one of Claims 6 to 10, **characterized in that** the position of the tyre (1) is detected before and/or after the turning.

12. Method according to one of Claims 6 to 11, **characterized in that** the tyre (1) is positioned positionally correctly after the turning.

## Revendications

1. Installation de vérification de pneus destinée à vérifier des pneus dont la surface latérale (2) est posée à plat sur un soubassement horizontal, avec un appareil de vérification de pneus,
**caractérisée en ce que**
l'appareil de vérification de pneus présente plusieurs têtes de vérification (5, 9) destinées vérifier la surface intérieure de roulement (8) du pneu (1) et un nombre double de têtes de vérification (6, 10, 7, 11) destinées vérifier la surface latérale extérieure (3, 2) du pneu (1).

2. Installation de vérification de pneus selon la revendication 1, **caractérisée par** un dispositif de retournement destiné à retourner le pneu (1).

3. Installation de vérification de pneus selon la revendication 2, **caractérisée par** un dispositif de marquage destiné à marquer le pneu (1) avant le retournement du pneu (1).

4. Installation de vérification de pneus selon l'une des revendications 2 ou 3, **caractérisée par** un dispositif de saisie de position destiné à saisir la position du pneu (1) avant et/ou après le retournement du pneu (1).

5. Installation de vérification de pneus selon l'une des revendications 2 à 4, **caractérisée par** un dispositif de positionnement destiné à positionner correctement le pneu (1) après le retournement du pneu (1).

6. Procédé de vérification de pneus comprenant une installation de vérification de pneus selon l'une des revendications précédentes,
**caractérisé en ce que**
une, plusieurs ou toutes les têtes de vérification (5, 9 ; 6, 7, 10, 11) vérifient une partie (8 ; 3, 2) du pneu (1),
**en ce que** le pneu (1) est retourné et
**en ce qu'**une, plusieurs ou toutes les têtes de vérification (5, 9 ; 6, 7, 10, 11) vérifient la partie restante (8 ; 2, 3) du pneu.

7. Procédé selon la revendication 6, **caractérisé en ce que** les têtes de vérification (5, 9 ; 6, 7, 10, 11) vérifient la surface intérieure de roulement (8) et la surface latérale extérieure (3, 2) du pneu (1).

8. Procédé selon la revendication 6 ou 7, **caractérisé en ce qu'**avant ou après le retournement du pneu (1), une surface latérale extérieure (3, 2) et une moitié de la surface intérieure de roulement (8) du pneu (1) sont vérifiées et **en ce qu'**après ou avant le retournement du pneu (1), l'autre surface latérale extérieure (2, 3) et l'autre moitié de la surface intérieure de roulement (8) du pneu (1) sont vérifiées.

9. Procédé selon la revendication 6 ou 7, **caractérisé en ce qu'**avant ou après le retournement du pneu (1), une surface latérale extérieure (3, 2) et la surface intérieure de roulement (8) du pneu (1) sont vérifiées et **en ce qu'**après ou avant le retournement du pneu (1), l'autre surface latérale extérieure (2, 3) du pneu (1) est vérifiée.

10. Procédé selon l'une des revendications 6 à 9, **caractérisé en ce que** le pneu (1) est marqué avant le retournement.

11. Procédé selon l'une des revendications 6 à 10, **caractérisé en ce que** la position du pneu (1) est saisie avant et/ou après le retournement.

12. Procédé selon l'une des revendications 6 à 11, **caractérisé en ce que** le pneu (1) est positionné correctement après le retournement.
